# EUROPEAN PATENT SPECIFICATION

(11) **EP 3 533 200 B1**
(45) Date of publication and mention of the grant of the patent: **19.08.2020**
(21) Application number: 17794847.8
(22) Date of filing: 23.10.2017
(51) Int. Cl.: H04L 29/06, H04L 12/24, H04L 9/08, H04L 29/08, H04L 29/14

(54) **FAULT TOLERANT AUTOMATIC SECRET ROTATION**
FEHLERTOLERANTE AUTOMATISCHE GEHEIMNISROTATION
ROTATION AUTOMATIQUE DE SECRET INSENSIBLE AUX DÉFAILLANCES

(30) Priority: 28.10.2016 US 201662414542 P; 19.05.2017 US 201715600129
(43) Date of publication of application: 04.09.2019
(73) Proprietor: Microsoft Technology Licensing LLC, Redmond, Washington 98052-6399 (US)
(72) Inventor: NESS, Andy, Redmond, Washington 98052-6399 (US); NG, Manson, Redmond, Washington 98052-6399 (US); STEINBOK, Jeffrey E., Redmond, Washington 98052-6399 (US); MCDOWELL, Jeff, Redmond, Washington 98052-6399 (US); MOULHAUD, Patrick, Redmond, Washington 98052-6399 (US)
(74) Representative: Grünecker Patent- und Rechtsanwälte PartG mbB
(86) International application number: PCT/US2017/057785
(87) International publication number: WO 2018/080950

(56) References cited:
- US-A1- 2014 003 608
- US-A1- 2015 143 115
- US-A1- 2016 105 283

## Description

### BACKGROUND

Various online applications, services and sites such as, for example, Microsoft OneDrive® require secret information to properly operate. Secret distribution infrastructures maintain and provide secret information to clients for accessing these services and the underlying data stored on these services Unfortunately, current security mechanisms are not always able to keep potential intruders from gaining access to security keys. For example, if a potential intruder obtains a key and identifies which data or services the key is associated with, then the intruder can acquire secure information or otherwise gain access to the service.

Overall, the examples herein of some prior or related systems and their associated limitations are intended to be illustrative and not exclusive. Upon reading the following, other limitations of existing or prior systems will become apparent to those of skill in the art.

US 2016/0105283 A1 relates to a technique for rotating security keys for client devices. After receiving an operation request, a server determines that the current active key for a client needs renewal. The server may determine this based on a predetermined key renewal schedule. Once the server determines that the client needs a key renewal, the server transmits a key expiration notification message to the client. The key expiration notification is designed to put the client on notice of expiration or impending expiration of client's currently active security key. Once the client determines, either by itself or after being notified by the server, that a key rotation is needed, it enters a key issuance phase. In this phase, the client may first transmit a key renewal request to the server. The request informs the server that the client is ready to receive a new security key and retire its old key. After the server receives the key renewal request message, the server generates a candidate key. The server then issues the generated candidate key to the client by transmitting the key value to the client. Once the candidate key is received, the client stores the newly-generated candidate key in its storage until the key is confirmed. If the server determines that the client is, indeed, in possession of the correct candidate key, the server marks the candidate security key that it is storing as the new active key with regard to the client.

US 2015/143115 A1 relates to techniques for avoiding license storming during an unplanned regional blackout. The technique comprises generating a leaf license for each geographic region of a plurality of geographic regions in a broadcast area, wherein each leaf license includes a first content encryption key for decrypting media content associated with the leaf license, and wherein each leaf license is bound to a root license for each geographic region in the plurality of geographic regions. In response to a blackout event, a new leaf license for each geographic region of the plurality of geographic regions that are located outside of a blackout area is generated, wherein each new leaf license includes a second content encryption key different from the first content encryption key for decrypting protected media content, and wherein each new leaf license remains bound to the root license for each geographic region in the plurality of geographic regions.

### OVERVIEW

It is the object of the present invention to improve prior art systems. This object is solved by the subject matter of the independent claims. Preferred embodiments are defined by the dependent claims.

Examples discussed herein relate to providing fault tolerant automatic secret rotation for secrets maintained in a secret distribution infrastructure. In an implementation, an apparatus includes one or more computer readable storage media and a secret rotation service including program instructions stored on the one or more computer readable storage media. The program instructions, when executed by one or more processing systems of a key master service (KMS) system, direct the one or more processing systems to rotate one or more secrets being served by the KMS system and provide other components of the secret distribution infrastructure with rotation information identifying the one or more secrets. The instructions, when executed, further direct the one or more processing system to validate that the one or more secrets have been rotated at the other components of the secret distribution infrastructure and, once validated, publish the rotation information to a metadata storage service.

Embodiments of the present invention also include computer-readable storage media containing sets of instructions to cause one or more processors to perform the methods, variations of the methods, and other operations described herein.

While multiple embodiments are disclosed, still other embodiments of the present invention will become apparent to those skilled in the art from the following detailed description, which shows and describes illustrative embodiments of the invention As will be realized, the invention is capable of modifications in various aspects, all without departing from the scope of the present invention. Accordingly, the drawings and detailed description are to be regarded as illustrative in nature and not restrictive.

This Overview is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

In order to describe the manner in which the above-recited and other advantages and features can be obtained, a more particular description is set forth and will be rendered by reference to specific examples thereof which are illustrated in the appended drawings. Understanding that these drawings depict only typical examples and are not therefore to be considered to be limiting of its scope, implementations will be described and explained with additional specificity and detail through the use of the accompanying drawings.
Figure 1 depicts a block diagram illustrating an example operational architecture for providing fault tolerant automatic secret rotation in accordance with some embodiments.
Figure 2A depicts a block diagram illustrating example components of a KMS system including a secret rotation service for providing fault tolerant automatic secret rotation in accordance with some embodiments.
Figure 2B depicts a block diagram illustrating example operations of secret rotation service for rotating secrets in accordance with some embodiments.
Figure 2C depicts example components of a secret rotation service for providing fault tolerant automatic secret rotation in accordance with some embodiments.
Figure 3 depicts a sequence diagram illustrating example operations of components of an operational architecture for providing fault tolerant automatic secret rotation in accordance with some embodiments.
Figure 4 depicts a flow diagram illustrating an example operational scenario for providing fault tolerant automatic secret rotation in accordance with some embodiments.
Figure 5 depicts a sequence diagram illustrating example operations of components of an operational architecture for providing fault tolerant automatic secret rotation in accordance with some embodiments.
Figure 6 is a block diagram illustrating a computing system suitable for implementing the technology disclosed herein, including any of the applications, architectures, elements, processes, and operational scenarios and sequences illustrated in the Figures and discussed below in the Technical Disclosure.

The drawings have not necessarily been drawn to scale. Similarly, some components and/or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

Examples are discussed in detail below. While specific implementations are discussed, it should be understood this is done for purpose of illustration only. A person skilled in the relevant art will recognize that other components and configurations may be used without parting from the scope of the subject matter of this disclosure, The implementations may be a machine-implemented method, a computing device, or a computer readable medium.

Techniques are described herein for providing fault tolerant automatic secret rotations within a secret storage and distribution infrastructure. The secret storage and distribution infrastructure is configured to provide secret information to underlying (external) applications, services or sites. The secret information (or secrets) can include certificates, passwords, keys, logins, domain accounts, *etc.* The secret information is delivered to clients so that the clients, e.g., running on mid-tier systems, can access the (external) applications, services or sites.

In some embodiments, a secret rotation service is described that changes secrets in accordance with a schedule at predefined intervals, e.g., up to several times a day. Dynamic scenarios or changes are also possible Initially, the secret rotation service identifies secrets needing to be changed or rotated. Then the secret rotation service updates or rotates these secrets or facilitates the rotation and updating of the secrets across the secret distribution infrastructure in a re-runnable format. This process includes persisting the updates or rotations in storage locations and/or caches.

Among other benefits, the techniques discussed herein facilitate various technical effects including the ability to keep secrets rotated so that potential intruders (or hackers) have little or no opportunity to access private data when the system is in a state of breach. Moreover, the automation described herein limits the need for administrators to interact with secrets.

In the following description, for the purposes of explanation, numerous specific details are set forth in order to provide a thorough understanding of embodiments of the present technology. It will be apparent, however, to one skilled in the art that embodiments of the present technology may be practiced without some of these specific details. While, for convenience, embodiments of the present technology are described with reference to supporting micro-services as native functions in spreadsheet applications, embodiments of the present technology are equally applicable to various other applications such as locating equipment.

The techniques introduced here can be embodied as special-purpose hardware (e.g., circuitry), as programmable circuitry appropriately programmed with software and/or firmware, or as a combination of special-purpose and programmable circuitry. Hence, embodiments may include a machine-readable medium having stored thereon instructions which may be used to program a computer (or other electronic devices) to perform a process. The machine-readable medium may include, but is not limited to, floppy diskettes, optical disks, compact disc read-only memories (CD-ROMs), magneto-optical disks, ROMs, random access memories (RAMs), erasable programmable read-only memories (EPROMs), electrically erasable programmable read-only memories (EEPROMs), magnetic or optical cards, flash memory, or other type of media / machine-readable medium suitable for storing electronic instructions.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

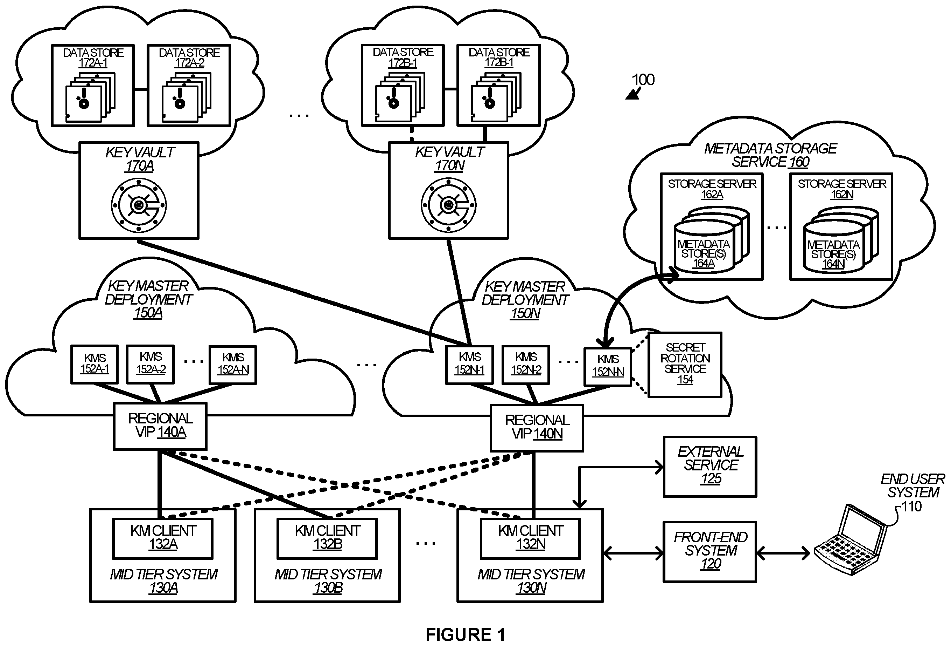

Figure 1 depicts a block diagram illustrating an example operational architecture 100 in accordance with some embodiments. More specifically, the example operational architecture 100 illustrates an example secret storage and distribution infrastructure configured to provide fault-tolerant and automatic secret rotations.

As shown in the example of Figure 1, the operational architecture 100 includes multiple key vaults 170a-170n, multiple key master deployments 150a-150n each having multiple KMS systems 152a-1-152n-n, multiple regional VIP systems 140a-140n, at least one metadata storage service 160, multiple mid-tier systems 130a-130n, an external service 125, a front-end system 120, and an end user system 110. The mid-tier systems 130a-130n are configured to execute corresponding key master (KM) clients 132a-132n for associated applications, sites or services, *e.g.,* online or cloud-based applications, services or sites such as, for example, Microsoft OneDrive®. Additionally, the operational architecture 100 includes at least one secret rotation service 154. As shown in the example of Figure 1, a single secret rotation service 154 is included in KMS system 152n-n. However, it is appreciated that any number of KMS systems (or each KMS system) can include a secret rotation service 154.

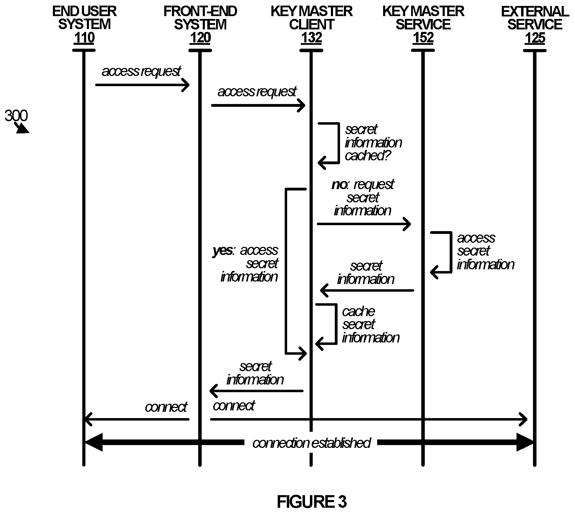

An end user system 110 can access an external service 125 through a front-end system 120. The front-end system 120 requests access to the external service 125 via a mid-tier system 130 of the mid-tier systems 130a-130n and, more particularly, a key master client 132 running on the mid-tier system 130. The key master client 132 requests secret information from a KMS system 152 of the multiple KMS systems 152a-1-152n-n. Once the secret information is returned to the front-end system 120, access to the external service 125 can be granted and a connection established. An example is shown and discussed in greater detail with reference to Figure 3.

The front-end system 120 can include GUIs (graphical user interface) running on a PC, mobile phone device, a Web server, or even other application servers. Such systems may employ one or more virtual machines, containers, or any other type of virtual computing resource. The front-end system 120 accesses a mid-tier system 130 of the mid-tier systems 130a-130n to obtain the requested information.

In operation, a key master client 132 running on the mid-tier system 130 requests secret information from a KMS system 152 of the multiple KMS systems 152a-1-152n-n deployed in the multiple key master deployments 150a-150n. As discussed herein, the KMS systems 152a-1-152n-n maintain secret information necessary for accessing the various external services, applications or sites. Accordingly, at least one of the KMS systems 152a-1-152n-n needs to be up and running for and end user system 110 to access the external service 125. The KMS systems 152a-1-152n-n provide (or deliver) requested secret information to key master clients 132a-132n running on the mid-tier systems 130a-130n responsive to requests for secret information. In some embodiments, the key master clients 132a-132n cache the received secret information.

The secret information is stored in the key vaults 170a-170n and the corresponding metadata associated with the secret information is stored in the metadata storage service 160. The metadata storage service 160 can include multiple storage servers 162a-162n that can be physically and/or functionally distributed. The storage servers 162a-162n each include one or more metadata stores 164. In some embodiments, a metadata store is, for example, an Azure SQL database. The metadata stores 164 can store multiple copies of the metadata for redundancy. Additional or secondary metadata stores located in different regions are also possible. In some embodiments, each write comprises an update to the metadata.

Each key vault 170 can include multiple copies of the data, *e.g.,* in data stores 172. Additionally, the multiple redundant key vaults 170a-170n can be included in separate regions, *e.g.,* physically distributed.

As discussed above, the key master deployments 150a-150n each include multiple instances of KMS systems. The key master deployments may be functionally and/or physically distributed. Each key master deployment 150 is accessible via a corresponding key master service regional VIP 140 that serves and acts as an access point for the KMS systems operating within that key master deployment. The KMS systems are not redundant. Rather, many instances of the KMS systems are needed in the infrastructure to simultaneously service requests from many key master clients. Although not shown, the KMS systems may be load balanced. Typically, every KMS system has the same data so that each and every one can service any key master client. As discussed herein, the KMS systems are required to be highly available to deliver the secret information to the clients. If the KMS systems cannot return secret information, the external service 125 (services or sites) cannot function.

In some embodiments, caching is built into the key master clients to enable storage of received secret information until the machine reboots or polls for new data from a KMS system. The key master clients only have needed (requested and received) secret information, *i.e.,* key master clients do not have all secret information.

Likewise, caching can be built into each KMS system and, unlike a key master client, a KMS system can include secret information for an entire site or external service 125. When secret information changes (*e.g*., via rotation or a user updating a secret through a client tool), the KMS system writes the secret to the key vault and the secret metadata the metadata store. In some embodiments, an autopilot feature is also provided.

Each KMS system may include server computers, blade servers, rack servers, and any other type of computing system (or collection thereof) suitable for carrying out the operations discussed herein. Likewise, the metadata storage servers and mid-tier systems may include server computers, blade servers, rack servers, and any other type of computing system (or collection thereof) suitable for carrying out the operations discussed herein.

As discussed herein, if secrets are compromised, intruders can potentially gain unauthorized access to customer data. Accordingly, the secret rotation service 154 minimizes potential damage occurring as a result of a breach by making it more difficult for intruders to gain access to customer data. For example, the secret rotation service 154 automatically rotates secrets at predefined intervals and provides client codes to the clients, *e.g.,* KM clients 132a-132n that handle the rotations. As shown, the secret rotation service 154 is located in KMS 152n-n. However, as discussed herein, the operational architecture 100 can include any number of secret rotation services located within the multiple KMS systems 152a-1-152n-n, within other components of the operational architecture 100, or as one or more stand-alone systems.

In some embodiments, each secret that needs rotation is twinned. For example, there may be two distinct instances of a secret and, at any given point in time, only one them is active (used by the system). The 'active' status can be stored in the metadata storage service 160 along with the next update time. The secret rotation service 154 periodically, *e.g.,* based on configuration information in the metadata storage service, finds and/or otherwise identifies secrets that need rotation, locks the secrets, rotates the secrets, and then updates the metadata storage service and the key vault (where the actual secret or value of the secret is stored). When a rotation occurs, the KMS systems 152a-1-152n-n poll the metadata storage service 160 to obtain the update. The key master clients (or objects) 132a-132n poll the KMS's to obtain the updated secret and start using the new secret. In most instances, the more frequent the rotation, the more difficult it is for a potential intruder to gain unauthorized access to customer data.

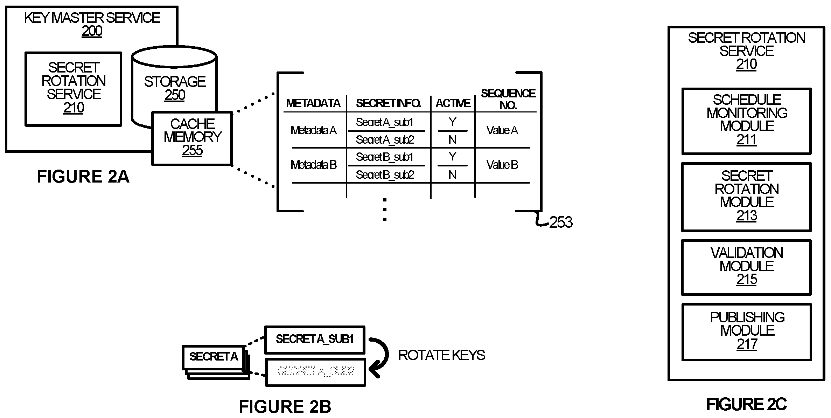

Figure 2A depicts example components of a KMS system 200, according to some embodiments. The KMS system 200 can be one of the KMS systems 152a-1-152n-n of Figure 1, although alternative configurations are possible. The functions represented by the components, modules and/or engines described with reference to Figure 2 can be implemented individually or in any combination thereof, partially or wholly, in hardware, software, or a combination of hardware and software.

As illustrated in the example of Figure 2A, the KMS system 200 includes a secret rotation service 210 and a storage container 250 that includes cache memory 255. The cache memory 255 includes secret information table 253. Other systems, databases, and/or components are also possible. For example, the KMS system 200 can include, among other components, one or more components related to secret hydration and secret distribution.

As shown in the example of Figure 2A, the KMS system 200 is hydrated with various secrets, each of which is twinned. From a user's perspective, there is just one secret, *e.g.,* 'secret A', but the infrastructure creates two sub secrets 'secretA_sub1' and 'secretA_sub2' - only one of which is 'active' at any point in time. The secret rotation service 210 monitors a secret rotation schedule (not shown) and periodically facilitates rotation of the sub secrets. For example, as shown in the example of Figure 2B, if secretA_sub1 is active, then the secret rotation service will rotate the sub secrets such that secretA_sub1 becomes inactive and secretA_sub2 becomes active. Two sub secrets are shown for simplicity; it is appreciated that the system may utilize any number of sub secrets.

As discussed in more detail with reference to Figure 2C, the secret rotation service verifies and/or otherwise ensures that the rotated secret is updated in all components (*e.g*., validates the rotated secret) prior to publishing the rotation information to the metadata storage service. That is, when it comes to rotating, the secret rotation service 210 takes the inactive sub secret and makes it active and an active sub secret and makes it inactive. Once verified and pushed out to all components, including the external service and client, the secret rotation service publishes the rotation information to the metadata storage service. The information will flow around back to the key master services and then back to all the key master clients.

Figure 2C depicts example components of a secret rotation service 210, according to some embodiments. The secret rotation service 210 can be secret rotation service 154 of Figure 1, although alternative configurations are possible. The functions represented by the components, modules and/or engines described with reference to Figure 2C can be implemented individually or in any combination thereof, partially or wholly, in hardware, software, or a combination of hardware and software.

As illustrated in the example of Figure 2C, the secret rotation service 210 includes a schedule monitoring module 211, a secret rotation module 213, a validation module 215 and a publishing module 217. Other systems, databases, and/or components are also possible.

The schedule monitoring module is configured to monitor a secret rotation schedule for secrets served by the KMS system. In some embodiments, the schedule can be dynamically modified by an administrator in response to some event. Alternatively, the schedule may indicate timing of periodic secret rotations.

The secret rotation module 213 is configured to perform the secret rotation. As discussed herein, secrets can be associated with multiple sub-secret instances. However, only one of the multiple sub-secret instances is active at any given time. In some embodiments, to rotate a secret, the KMS system deactivate a first sub-secret instance of the secret that is activated and activates a second sub-secret instance of the secret that is deactivated.

The validation module 215 is configured to provide other components of a secret distribution infrastructure with rotation information identifying the secrets being rotated or to be rotated. The validation module 215 further validates that the secrets have been rotated at the other components of the secret distribution infrastructure.

The publishing module 217 publishes the rotation information to a metadata storage service and any other necessary components of the infrastructure once the validation process for a rotation completes successfully.

Figure 3 depicts a sequence diagram 300 illustrating example operations of components of the operational architecture 100 of Figure 1, according to some embodiments. More specifically, the example of Figure 3 illustrates an end-user system accessing an external service using secret information provided by a KMS system. As shown in the example of Figure 3, sequence diagram 300 includes end user system 110, front-end system 120, key master client 132, KMS system 152, and external service 125.

To begin, the end user system 110 requests access to external service 125 through front-end system 120. The front-end system 120, in turn, requests access to external service 125 from a key master client 132 running on a mid-tier system. The key master client 132 determines whether secret information necessary for accessing the external service 125 is cached. If so, the key master client 132 accesses the secret information and provides the secret information to the front-end system 120. As discussed herein, the key master client 132 can cache received secret information until, for example, the mid-tier system on which the client is running reboots or new data is available from a KMS system. The key master clients only have needed (requested and received) secret information, *i.e.,* key master clients do not have all secret information.

If the secret information is not cached by the key master client 132, then the key master client 132 requests the secret information from a KMS system 152. As discussed above, the KMS systems in each key master deployment can include secret information for an entire site or external service 125. Responsive to receiving the request, KMS 152 accesses the requested secret information and provides the secret information to the key master client 132. The key master client 132 caches the requested secret information and provides the secret information to the front-end system 120. The front-end system 120 connects the end user system 110 to the external service 125 and a connection is established.

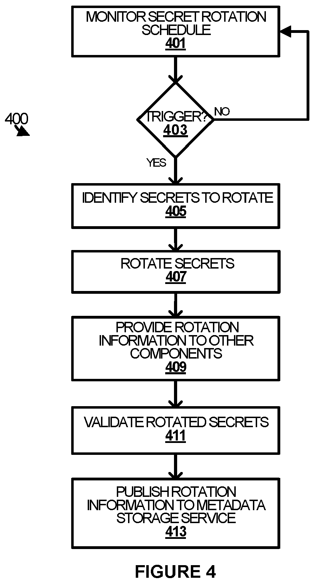

Figure 4 depicts a flow diagram illustrating an example operational scenario 400 for providing fault tolerant automatic secret rotation in accordance with some embodiments. The example operations 400 may be performed in various embodiments by a secret rotation service running on a KMS system such as, for example secret rotation service 154, or one or more processors, modules, engines, components or tools associated therewith.

To begin, at 401, the secret rotation service monitors a secret rotation schedule associated with secrets served by a KMS system for a secret rotation triggering event. As discussed herein the secrets can include certificates, passwords, keys, logins, domain accounts, *etc.* The KMS system can be, for example, the system on which the secret rotation service is running. At decision 403, the secret rotation service determines if a secret rotation triggering event has been detected. If so, at 405, the secret rotation service identifies one or more secrets to be rotated from the secrets served by the KMS system.

At 407, the secret rotation service rotates each of the one or more secrets. For example, each of the one or more secrets can include multiple sub-secret instances - only one of which is active at any given time. To rotate the secrets, the secret rotation service, for each of the one or more secrets, deactivates a first sub-secret instance of the secret that is activated and activates a second sub-secret instance of the secret that is deactivated. Other rotation methodologies are also possible.

At 409, the secret rotation service provides other components of a secret distribution infrastructure with rotation information identifying the one or more secrets. As discussed herein, the other components can include, among other components of the example operational architecture 100 of Figure 1, external service 125 or one or more of the key master clients 132a-132n. In some embodiments, to provide the other components of the secret distribution infrastructure with rotation information identifying the one or more secrets, the secret rotation service can generate and send codes to at least one of the other components. Among other information, the codes can indicate the rotation information.

At 411, the secret rotation service validates that the one or more identified secrets have been rotated at the other components of the secret distribution infrastructure. The validation can include a query/response, a receipt of an acknowledgement message from the components responsive to providing the rotation information or some other mechanism including combinations or variations thereof. Once the secret rotation service validates that the one more secrets have been rotated, at 413, the secret rotation service publishes the rotation information to a metadata storage service.

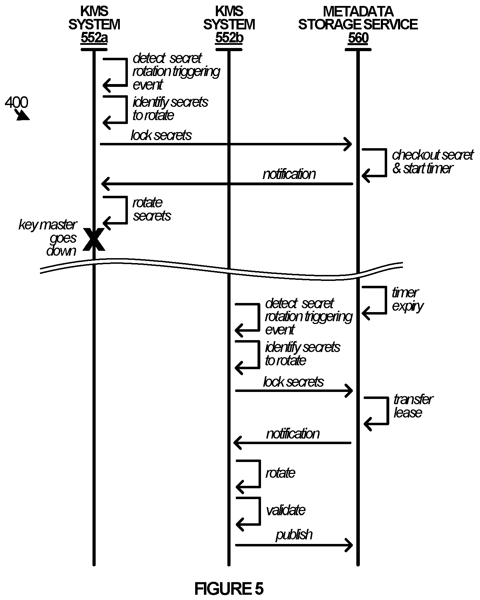

Figure 5 depicts a sequence diagram 500 illustrating example operations of components of the operational architecture 500 of Figure 5, according to some embodiments. More specifically, the example of Figure 5 illustrates a KMS system 552a failing after acquiring a lock on a secret or secret rotation information under rotation. As shown in the example of Figure 5, sequence diagram 500 includes KMS systems 552a and 552b and a metadata storage service 560. The KMS systems 552a and 552b can be any of multiple KMS systems 152a-1-152n-n of Figure 1 and metadata storage service 560 can be metadata storage service 160 of Figure 1, although alternative configurations are possible. In the example of Figure 5, KMS systems 552a and 552b each have a secret rotation service running thereon.

In operation, a KMS can fail after acquiring a lock on a secret or secret information under rotation. In such instances, the metadata storage service has a 'checked out' status for (or associated with) the secret under rotation. The 'checked out' status prevents other KMS servers from modifying the secret until the secret is checked back in. Locking a secret under rotation is important to avoid multiple KMS systems attempting to simultaneously rotate the same secret. Associated with the system is a timeout check that determines if the rotation process is taking too long (*e.g.,* an hour more than what is expected). If so, another KMS can take over the lease (checkout) and try rotating the secret. This avoids a potential deadlock condition for during secret rotation.

In another example of operation, the network (or some) issues prevent updating of metadata during the final phase of secret rotation. In such instances, the system can continue to function due to the twinning of secrets. The system can subsequently recover when the issues are resolved in a number of ways. For example, another KMS system can take over and re-rotate the inactive secret. Alternatively, the original KMS system that had the lease on the secret can eventually succeed in updating the metadata storage through simple retry or fault handling mechanisms.

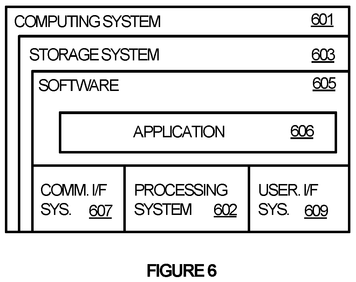

Figure 6 illustrates computing system 601, which is representative of any system or collection of systems in which the various applications, services, scenarios, and processes disclosed herein may be implemented. For example, computing system 601 may include server computers, blade servers, rack servers, and any other type of computing system (or collection thereof) suitable for carrying out the enhanced collaboration operations described herein. Such systems may employ one or more virtual machines, containers, or any other type of virtual computing resource in the context of supporting enhanced group collaboration.

Computing system 601 may be implemented as a single apparatus, system, or device or may be implemented in a distributed manner as multiple apparatuses, systems, or devices. Computing system 601 includes, but is not limited to, processing system 602, storage system 603, software 605, communication interface system 607, and user interface system 609. Processing system 602 is operatively coupled with storage system 603, communication interface system 607, and an optional user interface system 609.

Processing system 602 loads and executes software 605 from storage system 603. When executed by processing system 602 for deployment of scope-based certificates in multi-tenant cloud-based content and collaboration environments, software 605 directs processing system 602 to operate as described herein for at least the various processes, operational scenarios, and sequences discussed in the foregoing implementations. Computing system 601 may optionally include additional devices, features, or functionality not discussed for purposes of brevity.

Referring still to Figure 6, processing system 602 may comprise a microprocessor and other circuitry that retrieves and executes software 605 from storage system 603. Processing system 602 may be implemented within a single processing device, but may also be distributed across multiple processing devices or sub-systems that cooperate in executing program instructions. Examples of processing system 602 include general purpose central processing units, application specific processors, and logic devices, as well as any other type of processing device, combinations, or variations thereof.

Storage system 603 may comprise any computer readable storage media readable by processing system 602 and capable of storing software 605. Storage system 603 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 603 may also include computer readable communication media over which at least some of software 605 may be communicated internally or externally. Storage system 603 may be implemented as a single storage device, but may also be implemented across multiple storage devices or sub-systems co-located or distributed relative to each other. Storage system 603 may comprise additional elements, such as a controller, capable of communicating with processing system 602 or possibly other systems.

Software 605 may be implemented in program instructions and among other functions may, when executed by processing system 602, direct processing system 602 to operate as described with respect to the various operational scenarios, sequences, and processes illustrated herein. For example, software 605 may include program instructions for directing the system to perform the processes described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 605 may include additional processes, programs, or components, such as operating system software, virtual machine software, or application software. Software 605 may also comprise firmware or some other form of machine-readable processing instructions executable by processing system 602.

In general, software 605 may, when loaded into processing system 602 and executed, transform a suitable apparatus, system, or device (of which computing system 601 is representative) overall from a general-purpose computing system into a special-purpose computing system. Indeed, encoding software on storage system 603 may transform the physical structure of storage system 603. The specific transformation of the physical structure may depend on various factors in different implementations of this description. Examples of such factors may include, but are not limited to, the technology used to implement the storage media of storage system 603 and whether the computer-storage media are characterized as primary or secondary storage, as well as other factors.

For example, if the computer readable storage media are implemented as semiconductor-based memory, software 605 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 607 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

User interface system 609 may include a keyboard, a mouse, a voice input device, a touch input device for receiving a touch gesture from a user, a motion input device for detecting non-touch gestures and other motions by a user, and other comparable input devices and associated processing elements capable of receiving user input from a user. Output devices such as a display, speakers, haptic devices, and other types of output devices may also be included in user interface system 609. In some cases, the input and output devices may be combined in a single device, such as a display capable of displaying images and receiving touch gestures. The aforementioned user input and output devices are well known in the art and need not be discussed at length here. In some cases, the user interface system 609 may be omitted when the computing system 601 is implemented as one or more server computers such as, for example, blade servers, rack servers, or any other type of computing server system (or collection thereof).

User interface system 609 may also include associated user interface software executable by processing system 602 in support of the various user input and output devices discussed above. Separately or in conjunction with each other and other hardware and software elements, the user interface software and user interface devices may support a graphical user interface, a natural user interface, or any other type of user interface, in which a user interface to a productivity application may be presented.

Communication between computing system 601 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses, computing backplanes, or any other type of network, combination of network, or variation thereof. The aforementioned communication networks and protocols are well known and need not be discussed at length here. In any of the aforementioned examples in which data, content, or any other type of information is exchanged, the exchange of information may occur in accordance with any of a variety of well-known data transfer protocols.

The functional block diagrams, operational scenarios and sequences, and flow diagrams provided in the Figures are representative of exemplary systems, environments, and methodologies for performing novel aspects of the disclosure. While, for purposes of simplicity of explanation, methods included herein may be in the form of a functional diagram, operational scenario or sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The descriptions and figures included herein depict specific implementations to teach those skilled in the art how to make and use the best option. For the purpose of teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.

## Claims

1. An apparatus comprising:
one or more computer readable storage media; and
a secret rotation service (154) including program instructions stored on the one or more computer readable storage media, wherein the program instructions, when executed by one or more processing systems of a key master service, KMS, system (152A - 152N), direct the one or more processing systems to:
rotate (407) one or more secrets being served by the KMS system;
provide (409) other components of a secret distribution infrastructure with rotation information identifying the one or more secrets;
validate (411) that the one or more secrets have been rotated at the other components of the secret distribution infrastructure; and
once validated, publish (413) the rotation information to a metadata storage service,
wherein each of the one or more secrets includes multiple sub-secret instances, and wherein only one of the multiple sub-secret instances is active at any given time, and
wherein to rotate the one or more secrets, the program instructions, when executed by the one or more processing systems, further direct the one or more processing systems to:
for each secret of the one or more secrets,
deactivate a first sub-secret instance of the secret that is activated, and
activate a second sub-secret instance of the secret that is deactivated.

2. The apparatus of claim 1, wherein the program instructions, when executed by the one or more processing systems, further direct the one or more processing systems to:
lock the one or more secrets prior to rotation.

3. The apparatus of claim 1, wherein the program instructions, when executed by the one or more processing systems, further direct the one or more processing systems to:
detect a secret rotation triggering event; and
responsive to detecting the secret rotation triggering event, identify the one or more secrets to be rotated from the secrets being served by the KMS system.

4. The apparatus of claim 3, wherein the program instructions, when executed by the one or more processing systems, further direct the one or more processing systems to:
monitor a secret rotation schedule for secrets served by the KMS system.

5. The apparatus of claim 1, wherein the other components comprise an external service.

6. The apparatus of claim 1, wherein the other components comprise a key master client.

7. The apparatus of claim 1, wherein the program instructions, when executed by the one or more processing systems, further direct the one or more processing systems to:
assume a lock of at least one of the one or more secrets prior to rotation,
wherein the at least one of the one or more secrets is locked by another KMS system in the secret distribution infrastructure.

8. The apparatus of claim 1, wherein to provide other components of the secret distribution infrastructure with rotation information identifying the one or more secrets, the program instructions, when executed by the one or more processing systems, direct the one or more processing systems to:
send a code to at least one of the other components, wherein the code indicates the rotation information.

9. The apparatus of claim 1, wherein the secrets comprise one or more of certificates, passwords, keys, logins, or domain accounts.

10. A method of automatically rotating secrets for use in a secret distribution infrastructure, the method comprising:
monitoring (401) a secret rotation schedule;
identifying (405) one or more secrets from multiple secrets served by a KMS system in a secret distribution infrastructure based on the secret rotation schedule;
rotating (407) the one or more secrets;
providing (409) other components of the secret distribution infrastructure with rotation information identifying the one or more secrets;
validating (411) that the one or more secrets have been successfully rotated at the other components of the secret distribution infrastructure; and
publishing (413) the rotation information to a metadata storage service,
wherein rotating the one or more secrets further comprises:
for each secret of the one or more secrets,
deactivating a first sub-secret instance that is activated, and
activating a second sub-secret instance of the secret that is deactivated,
wherein each of the one or more secrets includes multiple sub-secret instances, and wherein only one of the multiple sub-secret instances is active at any given time.

11. The method of claim 10, further comprising locking the one or more secrets prior to rotation.

## Patentansprüche

1. Vorrichtung, umfassend:
ein oder mehrere computerlesbare Speichermedien; und
einen Geheimnisrotationsdienst (154) (secret rotation service), der auf dem einen oder den mehreren computerlesbaren Speichermedien gespeicherte Programmanweisungen einschließt, wobei die Programmanweisungen, wenn sie von einem oder mehreren Verarbeitungssystemen eines Key-Master-Dienst-Systems (KMS-System - key master service system) (152A -152N) ausgeführt werden, das das eine oder die mehreren Verarbeitungssystem anleiten zum:
Rotieren (407) eines oder mehrerer von dem KMS-System betreuter Geheimnisse;
Bereitstellen (409) anderer Komponenten einer Geheimnisverteilungsinfrastruktur (secret distribution infrastructure) mit Rotationsinformation, die ein oder mehrere Geheimnisse identifizieren;
Validieren (411), dass das eine oder die mehreren Geheimnisse an den anderen Komponenten der Geheimnisverteilungsinfrastruktur rotiert wurden; und
sobald validiert, Offenlegen (413) der Rotationsinformation an einen Metadaten-Speicherdienst,
wobei jedes, das eine oder die mehreren Geheimnisse, mehrere Sub-Geheimnisinstanzen einschließen, und wobei lediglich eine der mehreren Sub-Geheimnisinstanzen zu einer gegebenen Zeit aktiv ist, und
wobei, um das eine oder die mehreren Geheimnisse zu rotieren, die Programmanweisungen, wenn sie von dem einen oder den mehreren Verarbeitungssystemen ausgeführt werden, des Weiteren das eine oder die mehreren Verarbeitungssysteme anleiten zum:
für jedes Geheimnis des einen oder der mehreren Geheimnisse,
Deaktivieren einer ersten Sub-Geheimnisinstanz des Geheimnisses, das aktiviert ist, und
Aktivieren einer zweiten Sub-Geheimnisinstanz des Geheimnisses, das deaktiviert ist.

2. Vorrichtung nach Anspruch 1, wobei die Programmanweisungen, wenn sie von dem einen oder den mehreren Verarbeitungssystemen ausgeführt werden, des Weiteren das eine oder die mehreren Verarbeitungssysteme anleiten zum:
Sperren (lock) des einen oder der mehreren Geheimnisse vor der Rotation.

3. Vorrichtung nach Anspruch 1, wobei die Programmanweisungen, wenn sie von dem einen oder den mehreren Verarbeitungssystemen ausgeführt werden, des Weiteren das eine oder die mehreren Verarbeitungssysteme anleiten zum:
Ermitteln eines Auslöseereignisses für eine Geheimnisrotation; und
als Antwort auf das Ermitteln des Auslöseereignisses für die Geheimnisrotation, Identifizieren des einen oder der mehreren zu rotierenden Geheimnisse unter den von dem KMS-System betreuten Geheimnissen.

4. Vorrichtung nach Anspruch 3, wobei die Programmanweisungen, wenn sie von dem einen oder den mehreren Verarbeitungssystemen ausgeführt werden, des Weiteren das eine oder die mehreren Verarbeitungssysteme anleiten zum:
Überwachen eines Geheimnisrotationsablaufplans für vom KMS-System betreute Geheimnisse.

5. Vorrichtung nach Anspruch 1, wobei die anderen Komponenten einen externen Dienst umfassen.

6. Vorrichtung nach Anspruch 1, wobei die anderen Komponenten einen Key-Master-Client umfassen.

7. Vorrichtung nach Anspruch 1, wobei die Programmanweisungen, wenn sie von dem einen oder den mehreren Verarbeitungssystemen ausgeführt werden, des Weiteren das eine oder die mehreren Verarbeitungssysteme anleiten zum:
Annehmen einer Sperrung des einen und/oder der mehreren Geheimnisse vor der Rotation,
wobei das mindestens eine und/oder die mehreren Geheimnisse von einem anderen KMS-System in der Geheimnisverteilungsinfrastruktur gesperrt wird/werden.

8. Vorrichtung nach Anspruch 1, wobei, um andere Komponenten der Geheimnisverteilungsinfrastruktur mit Rotationinformation, die das eine oder die mehreren Geheimnisse identifizieren, bereitzustellen, die Programmanweisungen, wenn sie von dem einen oder den mehreren Verarbeitungssystemen ausgeführt werden, des Weiteren das eine oder die mehreren Verarbeitungssysteme anleiten zum:
Senden eines Codes an mindestens eine der anderen Komponenten, wobei der Code die Rotationsinformation angibt.

9. Vorrichtung nach Anspruch 1, wobei die Geheimnisse ein oder mehrere Zertifikate, Passwörter, Keys, Logins oder Domain-Accounts umfassen.

10. Verfahren zum automatischen Rotieren von Geheimnissen zur Anwendung in einer Geheimnisverteilungsinfrastruktur, wobei das Verfahren umfasst:
Überwachen (401) eines Geheimnisrotationsablaufplans;
Identifizieren (405) einer oder mehrerer Geheimnisse unter mehreren vom KMS-System betreuten Geheimnissen in einer Geheimnisverteilungsinfrastruktur auf Grundlage des Geheimnisrotationsablaufplans;
Rotieren (407) des einen oder der mehreren Geheimnisse;
Bereitstellen (409) anderer Komponenten der Geheimnisverteilungsinfrastruktur mit Rotationsinformation, die das eine oder die mehreren Geheimnisse identifizieren;
Validieren (411), dass das eine oder die mehreren Geheimnisse erfolgreich an den anderen Komponenten der Geheimnisverteilungsinfrastruktur rotiert wurde(n); und
Offenlegen (413) der Rotationsinformation an einen Metadaten-Speicherdienst,
wobei das Rotieren des einen oder der mehreren Geheimnisse des Weiteren umfasst:
für jedes Geheimnis des einen oder der mehreren Geheimnisse,
Deaktivieren einer ersten Sub-Geheimnisinstanz, die aktiviert ist, und
Aktivieren einer zweiten Sub-Geheimnisinstanz des Geheimnisses, die deaktiviert ist,
wobei jedes, das eine oder die mehreren Geheimnisse, mehrere Sub-Geheimnisinstanzen einschließt, und wobei lediglich eine der mehreren Sub-Geheimnisinstanzen zu einer gegebenen Zeit aktiv ist.

11. Verfahren nach Anspruch 10, das des Weiteren das Sperren des einen oder der mehreren Geheimnisse vor der Rotation umfasst.

## Revendications

1. Dispositif comprenant :
un ou plusieurs supports de stockage lisibles par un ordinateur ; et
un service de rotation de secrets (154) incluant des instructions de programme stockées sur l'un ou plusieurs supports de stockage lisibles par un ordinateur, dans lequel les instructions de programme, lorsqu'exécutées par un ou plusieurs systèmes de traitement d'un service maître des clés, KMS (Key Master Service) (152A - 152N), conduisent l'un ou plusieurs systèmes de traitement à :
faire tourner (407) un ou plusieurs secrets étant servis par le système KMS ;
fournir (409) à d'autres composants d'une infrastructure de distribution de secrets des informations de rotation identifiant l'un ou plusieurs secrets ;
valider (411) la rotation de l'un ou plusieurs secrets au niveau des autres composants de l'infrastructure de distribution de secrets ; et
une fois validée, publier (413) les informations de rotation auprès d'un service de stockage de métadonnées, dans lequel chacun de l'un ou plusieurs secrets inclut plusieurs instances de sous-secret, et dans lequel seule une des plusieurs instances de sous-secret est active à un quelconque moment donné, et
dans lequel pour faire tourner l'un ou plusieurs secrets, les instructions de programme, lorsqu'exécutées par l'un ou plusieurs systèmes de traitement, conduisent en outre l'un ou plusieurs systèmes de traitement à :
pour chaque secret de l'un ou plusieurs secrets,
désactiver une première instance de sous-secret du secret qui est activé, et
activer une deuxième instance de sous-secret du secret qui est désactivé.

2. Le dispositif de la revendication 1, dans lequel les instructions de programme, lorsqu'exécutées par l'un ou plusieurs systèmes de traitement, conduisent en outre l'un ou plusieurs systèmes de traitement à :
verrouiller l'un ou plusieurs secrets avant rotation.

3. Le dispositif de la revendication 1, dans lequel les instructions de programme, lorsqu'exécutées par l'un ou plusieurs systèmes de traitement, conduisent en outre l'un ou plusieurs systèmes de traitement à :
détecter un événement déclenchant une rotation de secret ; et
en réponse à une détection de l'événement déclenchant une rotation de secret, identifier l'un ou plusieurs secrets à faire tourner à partir des secrets servis par le système KMS.

4. Le dispositif de la revendication 3, dans lequel les instructions de programme, lorsqu'exécutées par l'un ou plusieurs systèmes de traitement, conduisent en outre l'un ou plusieurs systèmes de traitement à :
surveiller une programmation de rotation de secret pour des secrets servis par le système KMS.

5. Le dispositif de la revendication 1, dans lequel les autres composants comprennent un service externe.

6. Le dispositif de la revendication 1, dans lequel les autres composants comprennent un client maître des clés.

7. Le dispositif de la revendication 1, dans lequel les instructions de programme, lorsqu'exécutées par l'un ou plusieurs systèmes de traitement, conduisent en outre l'un ou plusieurs systèmes de traitement à :
considérer un verrou d'au moins un de l'un ou plusieurs secrets avant rotation,
dans lequel l'au moins un de l'un ou plusieurs secrets est verrouillé par un autre système KMS dans l'infrastructure de distribution de secrets.

8. Le dispositif de la revendication 1, dans lequel pour fournir à d'autres composants de l'infrastructure de distribution de secrets des informations de rotation identifiant l'un ou plusieurs secrets, les instructions de programme, lorsqu'exécutées par l'un ou plusieurs systèmes de traitement, conduisent l'un ou plusieurs systèmes de traitement à :
envoyer un code à au moins un des autres composants, dans lequel le code indique les informations de rotation.

9. Le dispositif de la revendication 1, dans lequel les secrets comprennent un ou plusieurs de certificats, mots de passe, clés, identifiants d'ouverture de session ou comptes de domaine.

10. Procédé de rotation automatique de secrets à utiliser dans une infrastructure de distribution de secrets, le procédé comprenant :
surveillance (401) d'une programmation de rotation de secret ;
identification (405) d'un ou plusieurs secrets à partir de plusieurs secrets servis par un système KMS dans une infrastructure de distribution de secrets selon la programmation de rotation de secret ;
rotation (407) de l'un ou plusieurs secrets ;
fourniture (409) à d'autres composants de l'infrastructure de distribution de secrets d'informations de rotation identifiant l'un ou plusieurs secrets ;
validation (411) de la rotation réussie de l'un ou plusieurs secrets au niveau des autres composants de l'infrastructure de distribution de secrets ; et
publication (413) des informations de rotation auprès d'un service de stockage de métadonnées,
dans lequel une rotation de l'un ou plusieurs secrets comprend en outre :
pour chaque secret de l'un ou plusieurs secrets,
désactivation d'une première instance de sous-secret du secret qui est activé, et
activation d'une deuxième instance de sous-secret du secret qui est désactivé,
dans lequel chacun de l'un ou plusieurs secrets inclut plusieurs instances de sous-secret, et dans lequel seule une des plusieurs instances de sous-secret est active à un quelconque moment donné.

11. Le procédé de la revendication 10, comprenant en outre un verrouillage de l'un ou plusieurs secrets avant rotation.
